# EUROPEAN PATENT SPECIFICATION

(11) **EP 0 527 275 B1**
(45) Date of publication and mention of the grant of the patent: **23.04.1997**
(21) Application number: 91307313.6
(22) Date of filing: 08.08.1991
(51) Int. Cl.: C08K 13/04, C08J 5/04, C09K 3/10, F16J 15/00

(54) **Spiral gasket**
Spiraldichtung
Joint d'étanchéité en spirale

(43) Date of publication of application: 17.02.1993
(73) Proprietor: NIPPON PILLAR PACKING CO. LTD., Osaka-shi Osaka-fu (JP)
(72) Inventor: Hashimoto, Akira, Sanda-shi, Hyogo-ken (JP); Takaoka, Masahiko, Kobe-shi, Hyogo-ken (JP); Miyoshi, Takeshi, Sanda-shi, Hyogo-ken (JP)
(74) Representative: Daley, Michael John

(56) References cited:
- WORLD PATENTS INDEX LATEST Derwent Publications Ltd., London, GB; AN 90-257657
- WORLD PATENTS INDEX LATEST Derwent Publications Ltd., London, GB; AN 90-003972
- CHEMICAL ABSTRACTS, vol. 113, no. 12, Columbus, Ohio, US; abstract no. 99604
- WORLD PATENTS INDEX LATEST Derwent Publications Ltd., London, GB; AN 89-359971
- Translation of document D2 (JP-A-2180981)

## Description

The present invention relates to a spiral or equivalently shaped gasket hereinafter called a spiral gasket for use in sealing of high temperature fluids, such as automobile emissions.

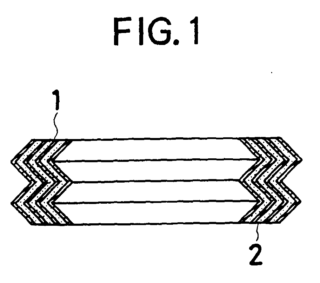

A spiral gasket in accordance with the prior art is shown in Figure 1 and is produced by rolling two times or more a belt-shaped metal hoop material 1 and a filler material 2 in the spiral configuration in cross-section and is generally used in sealing a space between pipe connection flanges.

The filler material is usually an inorganic felt made from inorganic fibres by paper-making process; asbestos filler material has however been traditionally used in spiral gaskets for high temperature conditions.

Recently, however, the use of asbestos has been restricted or even prohibited both from the standpoint of human health and the prevention of pollution. Asbestos is likely to produce much dust in its handling owing to its properties, and it is said to lead to lung cancer, or asbestosis or mesothelioma due to deposit of asbestos particles in the lungs or on the skin. Moreover asbestos is a pollution source, and the restrictions on its use are becoming stricter and stricter each passing year.

There is hence a strong demand for development of asbestos-free material, and, for example the filler material using glass fibre instead of asbestos has been proposed so far.

Glass fibre, however, cannot be used at 600°C or higher temperatures because the fibres melt and shrink. Glass fibre is not suitable, therefore around automobile emissions.

For heat resistance, nothing superior to or even equal to that of the asbestos filler material has been proposed to date.

It is hence a primary object of the invention to provide a spiral gasket possessing a heat resistance exceeding that of one using the asbestos filler.

According to the present invention there is provided a spiral gasket for sealing together pipes in an automobile exhaust system, such gasket being capable of effective sealing at sustained high, 800°C, temperatures and containing as a filler a composition comprising 36.5 wt.% or more of fibrous material essentially composed of 5 to 20 wt.% or more ceramic fibre mesh, 13.5 to 25 wt.% of sepiolite fibre mesh and 1 to 10 wt.% of organic fibre mesh; 59 wt.% or less of an inorganic powder which fills up the meshes; and 1 to 10 wt.% of a binder.

These proportions may be slightly varied provided the objectives of the invention as stated above and hereinafter are achieved.

The fibrous material is included in order to provide the filler material with resilient capability and strength. At less than 36.5 wt.% these properties degrade. Usually, in order that the porosity rate in the filler material may not be too high, that is, in order that sealing performance may not be sacrificed, preferably not more than 50 wt.% is included.

This fibrous material is composed of ceramic fibre, sepiolite and organic fibre. The ceramic fibre has a fibre diameter of about 1 to 5 µm, and forms mesh inside the filler material. The ceramic fibre is excellent in heat resistance and always provides the filler material with stable strength whether in standard temperature state or in heated state. But, when the ceramic fibres are rubbed hard with each other or compressed, the fibres are broken. Considering this point, the amount of ceramic fibre as contained is 5 to 20 wt.%.

Sepiolite sometimes called Meerschaum is a hydrated silicate of magnesium which occurs naturally. The α-type with fibre diameter of about 0.2 µm is preferably used. Sepiolite forms a fine mesh in the filler material and at standard temperature possesses a holding-together or interlocking property. When heated it sinters and functions as a heat-resistant binder. Such function is not exhibited sufficiently, if the amount of sepiolite is less than 13.5 wt.%. Unlike ceramic fibres, sepiolite is not broken. When the amount incorporated exceeds 25 wt.%, the filler material becomes harder than necessary and the sealing performance is lowered. Accordingly, the amount as contained is defined somewhere between 13.5 and 25 wt.%. Hemp pulp or the like may be used as the organic fibre. The organic fibre forms a mesh inside the filler material at the standard temperature, and gives a necessary strength when producing the filler material by the paper making process or manufacturing the the gasket, but the strength is not enough when the amount of the organic fibre as contained is less than 1 wt.%. But, if the amount of organic fibre as contained exceeds 10 wt.%, the heat resistance of the filler material or the gasket is degraded. Accordingly, the amount as contained is defined at between 1 and 10 wt.%.

Talc mineral, calcium carbonate, clay, barium sulphate or the like may be used as inorganic powder. Inorganic powder is blended in order to enhance the sealing performance of the gasket. For example, talc mineral is a flexible mineral in a thin flake form, and densely fills up the mesh of the fibrous material to enhance the sealing performance. The amount of the inorganic powder as contained is 59 wt.% or less, but preferably 45.5 wt.% or more.

Natural or synthetic rubber latex, resin emulsion or the like may be used as the binder. 1 to 10 wt.% is included in order to exhibit the binding function.

Derwent Pub., AN-90-003972, JP-A-1286958 discloses a heat expandable mat which supports catalysts in an automobile exhaust gas converter. The mat consists of sepiolite, ceramic fibres and vermiculite whose known expandability provides the desired properties. Vermiculite would not be a suitable inorganic powder for the present invention as its expandability would render it incapable of filling up the mesh at the high use temperatures. Derwent Pub. AN-90-257657, JP-A-2180981, discloses the use of organic fibres in a rubbery gasket for low temperature use. These organic fibres provide a permanent reinforcement in use in contrast to the present invention where the organic fibres are burnt off.

Fig. 1 is a sectional view of a spiral gasket.

As an embodiment, a filler material I in the composition as shown in Table 1 was obtained by a paper-making process. As reference examples, a filler material II in the composition as shown in Table 2 and a filler material III in the composition as shown in Table 3 were obtained by paper-making process. The filler material II is similar in composition to the filler material I except that glass fiber was used instead of ceramic fiber, and the filler material III is a traditional asbestos filler material. The bulk density was 1.0 g/cm³ in the filler materials I, II, and 0.82 g/cm³ in the filler material III. Using thus obtained filler materials I, II, III, spiral gaskets with inside diameter of 43.5 mm, outside diameter of 57 mm, and thickness of 5.0 mm (see Fig. 1) were manufactured, and the sealing performance and impact resistance were tested in each gasket.

In the sealing performance test, the gasket was compressed to a thickness of 4 mm, and in this stage nitrogen gas at 0.5 kg/cm² was injected into the inner circumference of the gasket, and the nitrogen gas leaking out to the outer circumference of the gasket was measured. The amount of the leaking nitrogen gas was measured by way of gauging the moving speed of the soap film in the measuring cylinder after introducing the leaking nitrogen gas into the measuring cylinder.

In the impact resistance test, a bob of 200 g was dropped to the gasket from a height of 500 mm to apply an impact to the gasket in the thicknesswise direction ( in the axial direction). The dropping of the bob was repeated 50 times. The weight loss due to chipping off of the filler material (that is, loosening and coming off of the filler material due to the impact of the bob) was measured, thereby evaluating the impact resistance strength of the filler material. Needless to say, the smaller is the weight loss of the filler due to impact, the stronger is the impact resistance.

These performance tests were conducted at the standard temperature, and also after heating the filler materials or the gaskets at 400° C, 600° C,and 800° C respectively for three hours. The results as shown in Table 4 and Table 5 were obtained.

As understood from the sealing characteristics shown in Table 4, the sealing performance of the gaskets using filler materials II and III is markedly lowered after heated at 800° C. This is because the glass fiber in the filler material II melts down and contracts, and the asbestos in the filler III releases crystalline water when heated at 800° C. By contrast, the sealing performance of the gasket using the filler material I of the present invention does not deteriorate even in the high temperature condition of 800 ° C. The same sealing function as in the condition of 600 ° C or lower temperature may be exhibited at 800° C.

Also as shown in the test results of the impact resistance in Table 5, the weight loss of the filler material II using glass fiber due to the chipping off after heated at 800° C is great. This indicates that the impact resistance of the filler material II is extremely weakened in high temperature condition. On the other hand, the filler material I is inferior to the filler material III at 600°C or lower temperature. But, after heated at 800 ° C, the weight loss of the filler material I due to the chipping off is smaller than that of the filler material III. This indicates that the impact resistance strength of the filler material I is superior at 800° C.

**<< Table 1 >>**

| Composition of filler material I (the invention) | | |
|---|---|---|
| Fibrous material | Ceramic fiber | 12 wt.% |
| | α-type sepiolite | 20 wt.% |
| | Hemp pulp (organic fiber) | 7 wt.% |
| Inorganic powder | Talc mineral | 56 wt.% |
| Binder | NBR latex | 5 wt.% |

**<< Table 2 >>**

| Composition of filler material II (reference) | | |
|---|---|---|
| Fibrous material | Glass fiber | 12 wt.% |
| | α-type sepiolite | 20 wt.% |
| | Hemp pulp | 7 wt.% |
| Inorganic powder | Talc mineral | 56 wt.% |
| Binder | NBR latex | 5 wt.% |

**<< Table 3 >>**

| Composition of filler material III (reference) | | |
|---|---|---|
| Fibrous material | Asbestos | 96.5 wt.% |
| Binder | NBR latex | 3.5 wt.% |

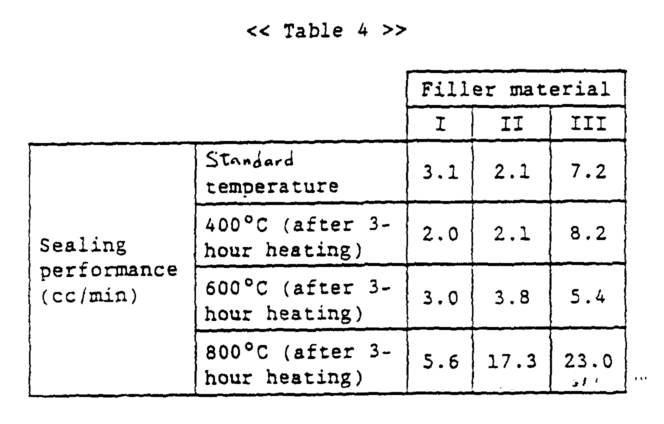

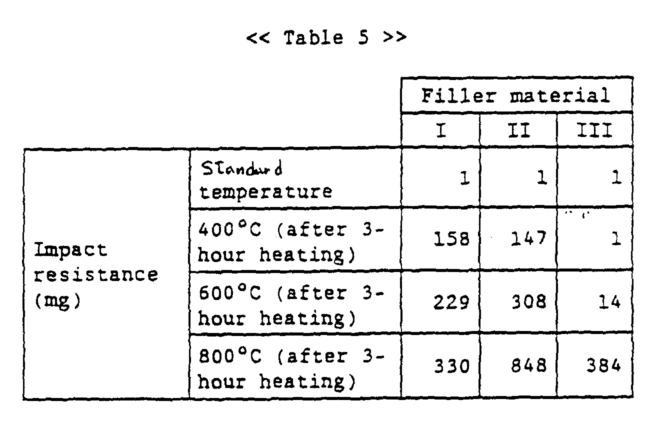

## Claims

1. A spiral gasket for sealing together pipes in an automobile exhaust system, such gasket being capable of effective sealing at high, 800°C, temperatures and containing as a filler a composition comprising 36.5 wt% or more of fibrous material essentially composed of 5 to 20 wt% or more ceramic fibre mesh, 13.5 to 25 wt% of sepiolite fibre mesh and 1 to 10 wt% of organic fibre mesh; 59 wt% or less of an inorganic powder which fills up the meshes; and 1 to 10 wt% of a binder.

2. A spiral gasket according to claim 1 wherein the inorganic powder is talc, calcium carbonate, clay or barium sulphate.

## Patentansprüche

1. Spiraldichtung zum gegenseitigen Abdichten von Rohren in einem Abgassystem von Kraftfahrzeugen, die in der Lage ist, bei hohen Temperaturen von 800°C wirkungsvoll zu sein und als Füller ein Gemisch enthält, das 36,5 Gew% oder mehr faseriges Material einschließt, das im wesentlichen zusammengesetzt ist aus 5 bis 20 Gew% oder mehr keramischem Fasergewebe, 13,5 bis 25 Gew% Sepiolithfasergewebe und 1 bis 10 Gew% organischem Fasergewebe, 59 Gew% oder weniger eines anorganischen Puders, der die Gewebezwischenräume füllt, sowie schließlich 1 bis 10 Gew% eines Bindemittels.

2. Spiraldichtung nach Anspruch 1, bei der der organische Puder Talcum, Kalziumkarbonat, Ton oder Bariumsulfat ist.

## Revendications

1. Un joint d'étanchéité d'étanchéité en spirale pour relier de manière étanche des tuyaux dans un système d'échappement d'automobile, un tel joint d'étanchéité étant en mesure d'être efficacement étanche à des températures élevées, 800°C, et contenant, en tant que matière de remplissage, une composition comprenant 36,5 % en poids ou plus de matière fibreuse, essentiellement composée de 5 à 20 % en poids ou plus d'un maillage de fibres de céramique, 13,5 à 25 % en poids d'un maillage de fibres de sépiolite et 1 à 10 % en poids d'un maillage de fibres organiques ; 59 % en poids ou moins d'une poudre minérale qui remplit les maillages ; et 1 à 10 % en poids d'un liant.

2. Un joint d'étanchéité d'étanchéité à spirale selon la revendication 1, dans laquelle la poudre minérale est du talc, du carbonate de calcium, de l'argile ou du sulphate de baryum.
